# EUROPEAN PATENT APPLICATION

(11) **EP 4 531 317 A1**
(43) Date of publication of application: **02.04.2025**
(21) Application number: 23201020.7
(22) Date of filing: 29.09.2023
(51) Int. Cl.: H04L 1/1829, H04L 1/1822

(54) **APPARATUS, METHOD, AND COMPUTER PROGRAM FOR RETRANSMITTING DATA**

(71) Applicant: Nokia Technologies Oy, 02610 Espoo (FI)
(72) Inventor: UYOATA, Uyoata Etuk, 9000 Aalborg (DK); AMIRI, Abolfazl, 9210 Aalborg (DK); PEDERSEN, Klaus Ingemann, 9000 Aalborg (DK); KOLDING, Troels Emil, 9270 Klarup (DK); MALDONADO, Pilar Andrés, 9000 Aalborg (DK)
(74) Representative: Page White Farrer

(57) **Abstract**

There is provided an apparatus, method, and computer program for causing a receiver to perform: receiving, at a lower protocol layer of the receiver from a lower protocol layer of a transmitter, an indication of when a first retransmission mechanism between the transmitter and receiver at the lower protocol layer will terminate; causing retransmission of a data packet according to the first retransmission mechanism; determining, at the lower protocol layer of the receiver using the received indication, that the first retransmission mechanism has been completed in respect of the data packet; and signaling, from the lower protocol layer of the receiver to a radio link control, RLC, protocol layer of the receiver, an indication that the data packet has not been received.

## Description

### Technical Field

Various examples described in this subject disclosure generally relate to apparatus, methods, and computer programs, and more particularly (but not exclusively) to apparatus, methods and computer programs for retransmitting data.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices operate in accordance with a given set of standards or specifications that set out what the various entities associated with the system are permitted to do and how that is to be achieved. Communication protocols and/or parameters that are to be used for the connection are also typically defined. Examples of standards are the so-called 5G standards.

Communications between different communication devices in a communication system may be controlled between a plurality of corresponding and different protocol stacks comprised in each device. For example, where a data packet is to be retransmitted because it has not been successfully received and/or decoded at a receiver, the retransmission of this data packet may be controlled by at least one protocol layer.

Issues can arise when there are a plurality of protocol layers that are each configured with a respective retransmission mechanism for causing retransmission of a missing data packet. For example, there may be unnecessary latency introduced into the communication system when these retransmission mechanisms are deployed in series.

### Summary

Several aspects of the various examples described in the subject disclosure are detailed as follows:
According to a first aspect, there is provided an apparatus for a receiver, the apparatus comprising means for performing: receiving, at a lower protocol layer of the receiver from a lower protocol layer of a transmitter, an indication of when a first retransmission mechanism between the transmitter and receiver at the lower protocol layer will terminate; causing retransmission of a data packet according to the first retransmission mechanism; determining, at the lower protocol layer of the receiver using the received indication, that the first retransmission mechanism has been completed in respect of the data packet; and signaling, from the lower protocol layer of the receiver to a radio link control, RLC, protocol layer of the receiver, an indication that the data packet has not been received.

The apparatus may further comprise means for performing: causing, by the RLC protocol layer of the receiver in response to said signaling, retransmission of the data packet at the RLC protocol layer using a second retransmission mechanism, wherein the lower protocol layer comprises a physical protocol layer and/or a medium access control protocol layer.

The received indication may indicate a maximum number of transmissions of a data packet, and the means for determining that the first retransmission mechanism has been completed may comprise means for: determining that the number of transmissions of the data packet equals the maximum number of transmissions.

The means for determining that the number of transmissions of the data packet equals the maximum number of transmissions may comprise means for: initializing a counter that tracks a number of transmissions of the data packet at the lower protocol layer; and identifying when a current value of the counter equals either zero or the maximum number of transmissions of the data packet.

The received indication may indicate that a current and/or next transmission of the data packet is the last transmission of the data packet using the first retransmission mechanism, and the means for determining that the first retransmission mechanism has been completed may comprise means for: detecting the indication that indicates that the current and/or next transmission of the data packet is the last transmission of the data packet using the first retransmission mechanism.

The apparatus may further comprise means for performing: initializing, at the RLC protocol layer of the receiver, a timer when the RLC protocol layer of the receiver detects that the data packet has not been correctly received; and terminating the timer early in response to said signaling, wherein terminating the timer causes the RLC protocol layer of the receiver to signal, to an RLC protocol layer of the transmitter, an indication that the data packet has not been successfully received.

The apparatus may further comprise means for performing: receiving, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver.

According to a second aspect, there is provided an apparatus for a transmitter, the apparatus comprising means for performing: transmitting, at a lower protocol layer of the transmitter to a lower protocol layer of a receiver, an indication of when a first retransmission mechanism between the transmitter and receiver at the lower protocol layer will be completed; causing retransmission of a data packet using the first retransmission mechanism; and completing the first retransmission mechanism when a maximum number of retransmissions has been reached, wherein the lower protocol layer is a physical protocol layer and/or a medium access control layer.

The transmitted indication may indicate the maximum number of transmissions of a data packet.

The transmitted indication may indicate that a current and/or next transmission of the data packet is the last transmission of the data packet using the first retransmission mechanism.

The apparatus may further comprise means for performing: receiving, at a radio link control, RLC, protocol layer of the transmitter from the RLC protocol layer of the receiver, an indication that the data packet has not been received.

The apparatus may further comprise means for performing: transmitting, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

According to a third aspect, there is provided an apparatus for a receiver, the apparatus comprising: at least one processor; and at least one memory comprising code that, when executed by the at least one processor, causes the apparatus to perform: receiving, at a lower protocol layer of the receiver from a lower protocol layer of a transmitter, an indication of when a first retransmission mechanism between the transmitter and receiver at the lower protocol layer will terminate; causing retransmission of a data packet according to the first retransmission mechanism; determining, at the lower protocol layer of the receiver using the received indication, that the first retransmission mechanism has been completed in respect of the data packet; and signaling, from the lower protocol layer of the receiver to a radio link control, RLC, protocol layer of the receiver, an indication that the data packet has not been received.

The apparatus may further be caused to perform: causing, by the RLC protocol layer of the receiver in response to said signaling, retransmission of the data packet at the RLC protocol layer using a second retransmission mechanism, wherein the lower protocol layer comprises a physical protocol layer and/or a medium access control protocol layer.

The received indication may indicate a maximum number of transmissions of a data packet, and the determining that the first retransmission mechanism has been completed may comprise: determining that the number of transmissions of the data packet equals the maximum number of transmissions.

The determining that the number of transmissions of the data packet equals the maximum number of transmissions may comprise: initializing a counter that tracks a number of transmissions of the data packet at the lower protocol layer; and identifying when a current value of the counter equals either zero or the maximum number of transmissions of the data packet.

The received indication may indicate that a current and/or next transmission of the data packet is the last transmission of the data packet using the first retransmission mechanism, and the determining that the first retransmission mechanism has been completed may comprise: detecting the indication that indicates that the current and/or next transmission of the data packet is the last transmission of the data packet using the first retransmission mechanism.

The apparatus may further be caused to perform: initializing, at the RLC protocol layer of the receiver, a timer when the RLC protocol layer of the receiver detects that the data packet has not been correctly received; and terminating the timer early in response to said signaling, wherein terminating the timer causes the RLC protocol layer of the receiver to signal, to an RLC protocol layer of the transmitter, an indication that the data packet has not been successfully received.

The apparatus may further be caused to perform: receiving, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver.

According to a fourth aspect, there is provided an apparatus for a transmitter, the apparatus comprising: at least one processor; and at least one memory comprising code that, when executed by the at least one processor, causes the apparatus to perform: transmitting, at a lower protocol layer of the transmitter to a lower protocol layer of a receiver, an indication of when a first retransmission mechanism between the transmitter and receiver at the lower protocol layer will be completed; causing retransmission of a data packet using the first retransmission mechanism; and completing the first retransmission mechanism when a maximum number of retransmissions has been reached, wherein the lower protocol layer is a physical protocol layer and/or a medium access control layer.

The transmitted indication may indicate the maximum number of transmissions of a data packet.

The transmitted indication may indicate that a current and/or next transmission of the data packet is the last transmission of the data packet using the first retransmission mechanism.

The apparatus may further be caused to perform: receiving, at a radio link control, RLC, protocol layer of the transmitter from the RLC protocol layer of the receiver, an indication that the data packet has not been received.

The apparatus may further be caused to perform: transmitting, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

According to a fifth aspect, there is provided a method for an apparatus for a receiver, the method comprising: receiving, at a lower protocol layer of the receiver from a lower protocol layer of a transmitter, an indication of when a first retransmission mechanism between the transmitter and receiver at the lower protocol layer will terminate; causing retransmission of a data packet according to the first retransmission mechanism; determining, at the lower protocol layer of the receiver using the received indication, that the first retransmission mechanism has been completed in respect of the data packet; and signaling, from the lower protocol layer of the receiver to a radio link control, RLC, protocol layer of the receiver, an indication that the data packet has not been received.

The method may further comprise: causing, by the RLC protocol layer of the receiver in response to said signaling, retransmission of the data packet at the RLC protocol layer using a second retransmission mechanism, wherein the lower protocol layer comprises a physical protocol layer and/or a medium access control protocol layer.

The received indication may indicate a maximum number of transmissions of a data packet, and the determining that the first retransmission mechanism has been completed may comprise: determining that the number of transmissions of the data packet equals the maximum number of transmissions.

The determining that the number of transmissions of the data packet equals the maximum number of transmissions may comprise: initializing a counter that tracks a number of transmissions of the data packet at the lower protocol layer; and identifying when a current value of the counter equals either zero or the maximum number of transmissions of the data packet.

The received indication may indicate that a current and/or next transmission of the data packet is the last transmission of the data packet using the first retransmission mechanism, and the determining that the first retransmission mechanism has been completed may comprise: detecting the indication that indicates that the current and/or next transmission of the data packet is the last transmission of the data packet using the first retransmission mechanism.

The method may further comprise: initializing, at the RLC protocol layer of the receiver, a timer when the RLC protocol layer of the receiver detects that the data packet has not been correctly received; and terminating the timer early in response to said signaling, wherein terminating the timer causes the RLC protocol layer of the receiver to signal, to an RLC protocol layer of the transmitter, an indication that the data packet has not been successfully received.

The method may further comprise: receiving, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver.

According to a sixth aspect, there is provided a method for an apparatus for a transmitter, the method comprising: transmitting, at a lower protocol layer of the transmitter to a lower protocol layer of a receiver, an indication of when a first retransmission mechanism between the transmitter and receiver at the lower protocol layer will be completed; causing retransmission of a data packet using the first retransmission mechanism; and completing the first retransmission mechanism when a maximum number of retransmissions has been reached, wherein the lower protocol layer is a physical protocol layer and/or a medium access control layer.

The transmitted indication may indicate the maximum number of transmissions of a data packet.

The transmitted indication may indicate that a current and/or next transmission of the data packet is the last transmission of the data packet using the first retransmission mechanism.

The method may further comprise: receiving, at a radio link control, RLC, protocol layer of the transmitter from the RLC protocol layer of the receiver, an indication that the data packet has not been received.

The method may further comprise: transmitting, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

According to a seventh aspect, there is provided an apparatus for a receiver, the apparatus comprising: receiving circuitry for receiving, at a lower protocol layer of the receiver from a lower protocol layer of a transmitter, an indication of when a first retransmission mechanism between the transmitter and receiver at the lower protocol layer will terminate; causing circuitry for causing retransmission of a data packet according to the first retransmission mechanism; determining circuitry for determining, at the lower protocol layer of the receiver using the received indication, that the first retransmission mechanism has been completed in respect of the data packet; and signalling circuitry for signaling, from the lower protocol layer of the receiver to a radio link control, RLC, protocol layer of the receiver, an indication that the data packet has not been received.

The apparatus may further comprise: causing circuitry for causing, by the RLC protocol layer of the receiver in response to said signaling, retransmission of the data packet at the RLC protocol layer using a second retransmission mechanism, wherein the lower protocol layer comprises a physical protocol layer and/or a medium access control protocol layer.

The received indication may indicate a maximum number of transmissions of a data packet, and the determining circuitry for determining that the first retransmission mechanism has been completed may comprise: determining circuitry for determining that the number of transmissions of the data packet equals the maximum number of transmissions.

The determining circuitry for determining that the number of transmissions of the data packet equals the maximum number of transmissions may comprise initializing circuitry for initializing a counter that tracks a number of transmissions of the data packet at the lower protocol layer; and identifying circuitry for identifying when a current value of the counter equals either zero or the maximum number of transmissions of the data packet.

The received indication may indicate that a current and/or next transmission of the data packet is the last transmission of the data packet using the first retransmission mechanism, and the determining circuitry for determining that the first retransmission mechanism has been completed may comprise: detecting circuitry for detecting the indication that indicates that the current and/or next transmission of the data packet is the last transmission of the data packet using the first retransmission mechanism.

The apparatus may further comprise: initializing circuitry for initializing, at the RLC protocol layer of the receiver, a timer when the RLC protocol layer of the receiver detects that the data packet has not been correctly received; and terminating circuitry for terminating the timer early in response to said signaling, wherein terminating the timer causes the RLC protocol layer of the receiver to signal, to an RLC protocol layer of the transmitter, an indication that the data packet has not been successfully received.

The apparatus may further comprise: receiving circuitry for receiving, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver.

According to an eighth aspect, there is provided an apparatus for a transmitter, the apparatus comprising: transmitting circuitry for transmitting, at a lower protocol layer of the transmitter to a lower protocol layer of a receiver, an indication of when a first retransmission mechanism between the transmitter and receiver at the lower protocol layer will be completed; causing circuitry for causing retransmission of a data packet using the first retransmission mechanism; and completing circuitry for completing the first retransmission mechanism when a maximum number of retransmissions has been reached, wherein the lower protocol layer is a physical protocol layer and/or a medium access control layer.

The transmitted indication may indicate the maximum number of transmissions of a data packet.

The transmitted indication may indicate that a current and/or next transmission of the data packet is the last transmission of the data packet using the first retransmission mechanism.

The apparatus may further comprise: receiving circuitry for receiving, at a radio link control, RLC, protocol layer of the transmitter from the RLC protocol layer of the receiver, an indication that the data packet has not been received.

The apparatus may further comprise means: transmitting circuitry for transmitting, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

According to a ninth aspect, there is provided non-transitory computer readable media comprising program instructions for causing an apparatus for a receiver to perform: receiving, at a lower protocol layer of the receiver from a lower protocol layer of a transmitter, an indication of when a first retransmission mechanism between the transmitter and receiver at the lower protocol layer will terminate; causing retransmission of a data packet according to the first retransmission mechanism; determining, at the lower protocol layer of the receiver using the received indication, that the first retransmission mechanism has been completed in respect of the data packet; and signaling, from the lower protocol layer of the receiver to a radio link control, RLC, protocol layer of the receiver, an indication that the data packet has not been received.

The apparatus may further be caused to perform: causing, by the RLC protocol layer of the receiver in response to said signaling, retransmission of the data packet at the RLC protocol layer using a second retransmission mechanism, wherein the lower protocol layer comprises a physical protocol layer and/or a medium access control protocol layer.

The received indication may indicate a maximum number of transmissions of a data packet, and the determining that the first retransmission mechanism has been completed may comprise: determining that the number of transmissions of the data packet equals the maximum number of transmissions.

The determining that the number of transmissions of the data packet equals the maximum number of transmissions may comprise: initializing a counter that tracks a number of transmissions of the data packet at the lower protocol layer; and identifying when a current value of the counter equals either zero or the maximum number of transmissions of the data packet.

The received indication may indicate that a current and/or next transmission of the data packet is the last transmission of the data packet using the first retransmission mechanism, and the determining that the first retransmission mechanism has been completed may comprise: detecting the indication that indicates that the current and/or next transmission of the data packet is the last transmission of the data packet using the first retransmission mechanism.

The apparatus may further be caused to perform: initializing, at the RLC protocol layer of the receiver, a timer when the RLC protocol layer of the receiver detects that the data packet has not been correctly received; and terminating the timer early in response to said signaling, wherein terminating the timer causes the RLC protocol layer of the receiver to signal, to an RLC protocol layer of the transmitter, an indication that the data packet has not been successfully received.

The apparatus may further be caused to perform: receiving, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver.

According to a tenth aspect, there is provided non-transitory computer readable media comprising program instructions for causing an apparatus for a transmitter to perform: transmitting, at a lower protocol layer of the transmitter to a lower protocol layer of a receiver, an indication of when a first retransmission mechanism between the transmitter and receiver at the lower protocol layer will be completed; causing retransmission of a data packet using the first retransmission mechanism; and completing the first retransmission mechanism when a maximum number of retransmissions has been reached, wherein the lower protocol layer is a physical protocol layer and/or a medium access control layer.

The transmitted indication may indicate the maximum number of transmissions of a data packet.

The transmitted indication may indicate that a current and/or next transmission of the data packet is the last transmission of the data packet using the first retransmission mechanism.

The apparatus may further be caused to perform: receiving, at a radio link control, RLC, protocol layer of the transmitter from the RLC protocol layer of the receiver, an indication that the data packet has not been received.

The apparatus may further be caused to perform: transmitting, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

According to an eleventh aspect, there is provided a computer program product stored on a medium that may cause an apparatus to perform any method as described herein.

According to a twelfth aspect, there is provided an electronic device that may comprise apparatus as described herein.

According to a thirteenth aspect, there is provided a chipset that may comprise an apparatus as described herein.

### Brief Description of FIGs.

Some examples, will now be described, merely by way of illustration only, with reference to the accompanying drawings in which:
FIG. 1 shows a schematic representation of a 5G system;
FIG. 2 shows a schematic representation of a network apparatus;
FIG. 3 shows a schematic representation of a user equipment;
FIG. 4 illustrates retransmission mechanisms deployable at multiple protocol layers;
FIGs. 5 and 6 illustrate example signaling operations;
FIGs. 7A and 7B illustrate example signaling; and
FIGs. 8 and 9 illustrate example operations performed by apparatus described herein.

### Detailed Description

**The** following considers situations in which a retransmission mechanism is deployed at a radio link control (RLC) protocol layer, and another retransmission is deployed at a lower protocol layer (e.g., at the Physical (PHY) protocol layer and/or at the medium access control (MAC) protocol layer).

In particular, the following aims to provide mechanisms for reducing the amount of time taken for a retransmission mechanism to be deployed at the RLC protocol layer relative to the current time taken. Stated differently, the following aims to improve the latency associated with retransmission mechanisms currently deployed at the RLC protocol layer. In general, this is achieved by configuring the PHY and/or MAC protocol layer to inform the RLC protocol layer when a PHY and/or MAC protocol layer retransmission has been completed (e.g., terminated), which triggers the RLC protocol layer to deploy the RLC's retransmission mechanism earlier than the RLC's retransmission mechanism is currently deployed.

Further illustration of how this may be achieved is provided below.

In the following examples, certain aspects are explained with reference to devices that are often configured to communicate via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

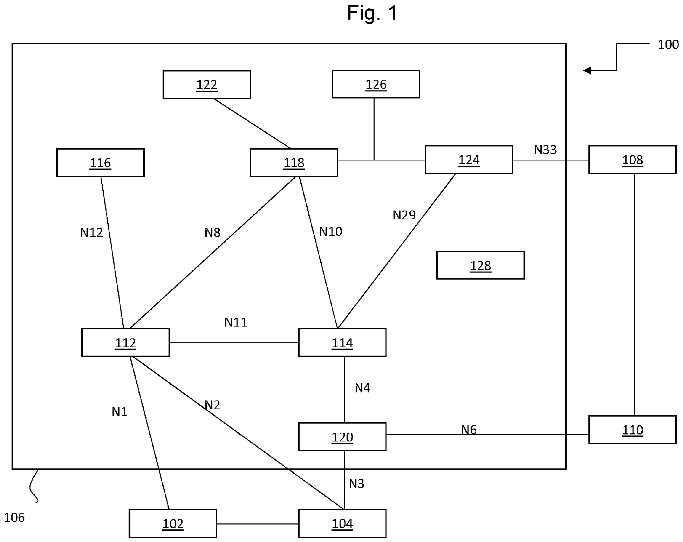

Before describing in detail the examples, certain facets of a 5G wireless communication system are briefly explained with reference to FIG. 1.

3GPP standards defined a service-based architecture in 5G, which is expected to be utilized in 6G and beyond. In a service-based architecture, a modular framework is used in which common applications can be deployed using components from different sources and/or suppliers.

FIG. 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non-3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more Unified Data Management (UDM)functions 118, one or more User Plane Functions (UPF) 120, one or more Unified Data Repository (UDR) functions 122, one or more Network Repository Functions (NRF) 128, and/or one or more Network Exposure Functions (NEF) 124. The role of an NEF is to provide secure exposure of network services (e.g. voice, data connectivity, charging, subscriber data, and so forth) towards a 3rd party. Although NRF 128 is not depicted with its interfaces, it is understood that this is for clarity reasons and that NRF 128 may have a plurality of interfaces with other network functions. Likewise, other network functions of the 5GC 106 may include one or more further interfaces with each other that are not depicted in FIG. 1.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

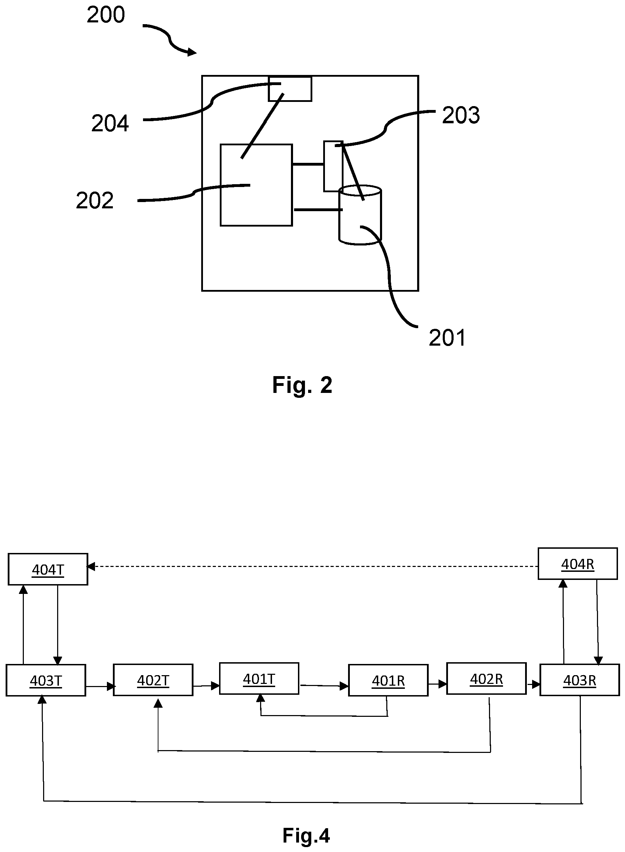

FIG. 2 shows an example of a control apparatus for a communication system, for example to be coupled to and/or for controlling a station of an access system, such as a RAN node, e.g. a base station, gNB, a central unit of a cloud architecture or a node of a core network such as an Mobility Management Entity (MME) or Serving Gateway (S-GW), a scheduling entity such as a spectrum management entity, or a server or host, for example an apparatus hosting a Network Repository Function (NRF), Network Data Analytics Function (NWDAF), Access and Mobility Management Function (AMF), Session Management Function (SMF), Unified Data Management/Unified Data Repository (UDM/UDR), and so forth. The control apparatus may be integrated with or external to a node or module of a core network or Radio Access Network (RAN). In some examples, base stations comprise a separate control apparatus unit or module. In other examples, the control apparatus can be another network element, such as a radio network controller or a spectrum controller. The control apparatus 200 can be configured to provide control on communications in the service area of the system. The apparatus 200 comprises at least one memory 201, at least one data processing unit 202, 203 and an input/output interface 204. Via the interface, the control apparatus 200 can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions. References to "code" herein are understood to refer to software code, and vice versa.

The station of the access system may be categorized into two different types: distributed units (DUs), and centralized units (CUs).

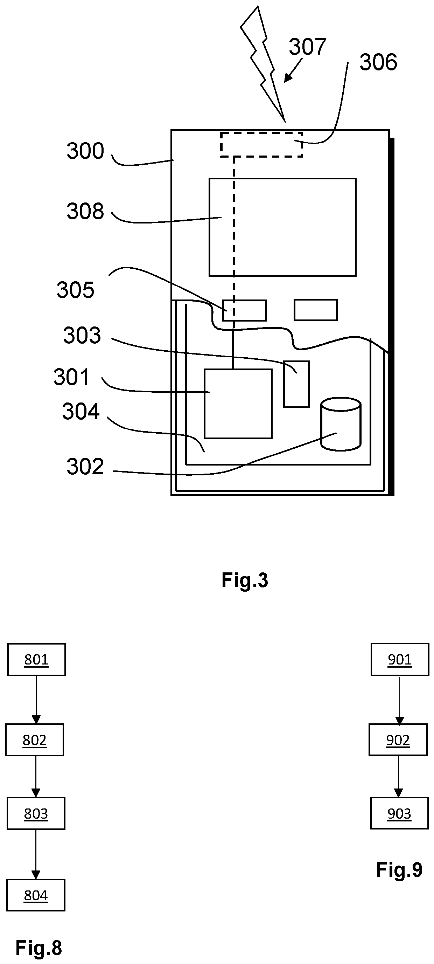

An example wireless communication device will now be described in more detail with reference to FIG. 3 showing a schematic, partially sectioned view of a communication device 300. Such a communication device may, in some examples, be referred to as a user equipment (UE) or terminal. An appropriate mobile communication device may, however, be provided by any device capable of sending and receiving radio signals. Non-limiting and illustrative examples comprise a mobile station (MS) or mobile device such as a mobile phone or what is referred to as a 'smart phone', a vehicle, a robot, an unmanned aerial vehicle (e.g., a drone), a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting and illustrative examples of these services comprise two-way or multi-way calls, data communication or multimedia services or simply an access to a data communications network system, such as the Internet. Users may also be provided broadcast or multicast data. Non-limiting and illustrative examples of the content comprise downloads, television and radio programs, videos, advertisements, various alerts and/or other information.

A wireless communication device may, for example, be implemented as a mobile device or a stationary device, or a combination thereof. A mobile device is a device not fixed to a particular location, whereas a stationary device may be configured to be fixed to a particular location (or removably attached thereto). The wireless device may utilize human interaction for communication, or may not utilize human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In FIG. 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software code and hardware aided execution of tasks it is configured to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

The present disclosure relates to data recovery mechanisms performed between a transmitter and a receiver. It is understood that the transmitter and/or receiver mentioned herein may be located at various points of a communication network. For example, the transmitter and receiver may be comprised in respective UE (e.g., as described above in relation to FIG. 3). As another example, the transmitter may be located in a UE and the receiver may be located in a network node (e.g., as described above in relation to FIG. 2). As another example, the transmitter and receiver may be located in respective network nodes.

The transmitter and/or receiver may comprise a plurality of different types of data recovery loops that are used to ensure reliability of transmission of data between the transmitter and the receiver. These data recovery loops generally provide some mechanism for causing retransmission of data that has not been correctly received at the receiver. The data recovery loops are also referred to herein as retransmission mechanisms.

The data recovery loops may be deployable at respective protocol layers of the protocol stack. For example, at the PHY and/or MAC protocol layers, a Hybrid Automatic Repeat request (H-ARQ) process may be used to cause re-transmission of a missing data packet (e.g., a data packet that has not been received at all, and/or a data packet that has been incorrectly received). At the Radio Link Control (RLC) layer, an Automatic Repeat reQuest (ARQ) process may be used to cause retransmission of the missing data packet. RLC ARQ is a process that is used to recover packets that were not recovered by the lower layer HARQ procedure (e.g., due to time-outs and/or false-positive acknowledgement errors).

FIG. 4 illustrates example retransmission mechanisms that may be used as data recovery loops at different protocol layers.

FIG. 4 illustrates the following protocol layers at a transmitter side: a transmitter MAC/PHY protocol layer 401T, a transmitter RLC protocol layer 402T, a transmitter Packet Data Convergence Protocol (PDCP) protocol layer 403T, and a transmitter Transmission Control Protocol (TCP) protocol layer 404T.

FIG. 4 illustrates the following protocol layers at a receiver side: a receiver MAC/PHY protocol layer 401R, a receiver RLC protocol layer 402R, a receiver Packet Data Convergence Protocol (PDCP) protocol layer 403R, and a receiver Transmission Control Protocol (TCP) protocol layer 404R. FIG. 4 illustrates data being transmitted over a channel from the transmitter MAC/PHY protocol layer 401T to the receiver MAC/PHY protocol level 401R.

The MAC/PHY protocol layer may provide a first layer retransmission mechanism using some type of ARQ procedure (e.g., H-ARQ, ARQ, etc.). This may be performed at a per-transmission level of operation.

The RLC protocol layer may provide a second layer retransmission mechanism using some type of RLC Acknowledged Mode procedure. This may be performed within a predetermined window of time from the initial transmission and/or receipt of a negative acknowledgement (NACK).

The PDCP protocol layer may provide a third layer retransmission mechanism using some type of PDCP-based recovery mechanism (e.g., handover, multi-connectivity, etc.).

The TCP protocol layer may provide a fourth layer retransmission mechanism using some type of TCP-based recovery mechanism (e.g., TCP Acknowledged mode).

The RLC protocol layer is associated with a plurality of timers and state variables. The RLC protocol layer can be implemented in three modes, namely a transparent mode, an unacknowledged mode, and an acknowledged mode. The following is focused on the acknowledged mode. In general, the following techniques may be applied in respect of any RLC protocol layer retransmission mechanism in which an RLC protocol layer of a receiver causes a retransmission of a missing data packet from the transmitter to the receiver.

The acknowledged mode may use mechanisms at the transmitter and/or receiver to enable retransmissions of a missing data packet.

For example, at the transmitter-side, a polling mechanism can be used to request a report from the receiver using a "poll bit". This polling mechanism may cause the receiver to provide the transmitter with an indication of which data packets have been successfully received and correctly decoded.

As another example, the receiver can autonomously (e.g., without being solicited/polled by a transmitter) initiate retransmission using configured timers. Two of the timers associated with the acknowledged mode are the t-status Prohibit timer and the t-Reassembly timer, which are described in more detail in 3GPP TS 38.322.

The former timer (the t-status Prohibit timer) provides a window of time within which no status report indicating received and/or missing sequence numbers can be sent from an RLC transmitter entity at the receiving device to its peer entity at the transmitting device. This status report is also referred to herein as a "STATUS PDU".

The latter timer (the t-Reassembly timer) defines a window of time within which packets are received in-sequence, and so provides an avenue to detect missing packets.

For example, assuming each data packet transmitted comprises a respective sequence number, when the RLC protocol layer determines that it has received two data packets consecutively that do not comprise consecutive sequence numbers, the RLC may start (e.g., initialize) the t-Reassembly timer. If the missing packet (e.g., the packet comprising the sequence number that connects the sequence number of the two data transmissions) is not received before the t-Reassembly timer expires, the RLC protocol layer at the receiver causes transmission of a STATUS PDU message to the RLC protocol layer of the transmitter. Receipt of this STATUS PDU message causes the RLC protocol layer of the transmitter to cause retransmission of the missing packet. If the missing packet is received before expiry of the t-Reassembly timer, the RLC protocol layer of the receiver abandons the timer. No STATUS PDU message is transmitted in this latter case.

Stated differently, the RLC receiver may use sequence numbering of each packet in order to determine whether a transmitted packet is missing by checking if a packet's reception is out of sequence or not relative to other transmitted packets received by the RLC receiver. When a missing packet is detected, the RLC receiver starts the t-Reassembly timer. This t-Reassembly timer is set such that it accommodates the retransmission processes happening at the lower layer (namely HARQ retransmissions). The t-Reassembly timer stops when either the missing packet is received, or when the t-Reassembly timer expires.

Current 3GPP standards allow for the t-Reassembly timer to be set to a duration of between 0 and 200 milliseconds using RRC signaling. In more detail, the RLC t-Reassembly timer can be configured based on any of the values as defined in RLC configuration subsection of section 6.32 in the standard (TS 38.331), which is between 0 to 200ms for terrestrial networks. In selecting the exact value, the setting may be dominated by the maximum HARQ retransmission time at the lower layer(s) and an assumed radio frame configuration and its parameters (such as the sub-carrier spacing, time division duplex (TDD) configuration, etc.).

The duration of the t-Reassembly timer is often set such that the t-Reassembly timer does not expire before the retransmission processes (e.g., the HARQ processes) are completed at the PHY/MAC protocol layer in respect of the missing packet. This t-reassembly timer may thus contribute to a reception delay of the missing packet.

For example, considering a gNB as a transmitter and a UE as a receiver, the MAC/PHY layer of a gNB may be configured to transmit a data packet up to a maximum number of occasions, after which the MAC/PHY layer of the gNB stops attempting retransmissions. This maximum number of occasions may be used to set the t-Reassembly timer value in the UE RLC acknowledged mode entity. However, the t-reassembly timer at the RLC does not know when the maximum number of retransmissions at the MAC protocol layer has actually been reached and may incur additional delay according to the worst-case number of retransmissions and scheduling delays.

To provide a numerical example, the one-way user plane latency of an enhanced Mobile Broadband (eMBB) transmission with a maximum number of 3 HARQ retransmissions is 8.875ms for a subcarrier spacing of 30kHz with 14 symbols per slot for frequency division duplex (FDD) is considered. The RLC t-reassembly time at the receiver may be configured to have a value of 15ms. When the receiver detects a missing packet and consequently starts the t-reassembly timer, and the transmitter goes through the 3 HARQ retransmissions, the RLC receiver waits for at least 6.125ms more before sending a STATUS PDU to the transmitter end for an RLC retransmission. Even where the RLC t-reassembly timer is set conservatively to 10ms, the RLC waits for 1.125 ms, which is a delay of more than twice the transmission time interval (TTI).

The following aims to address at least one of the above-mentioned issues.

In particular, the following aims to provide at least one mechanism for reducing latency resulting from RLC retransmission mechanisms relative to current RLC retransmission mechanisms.

In particular, a receiver may be configured to determine when transmission attempts have been exhausted on a given retransmission process (e.g., a H-ARQ process) using information provided to the receiver (e.g., a UE, and/or an access network node) in explicit signaling from the transmitter (e.g., an access network node, such as a gNB, and/or a UE).

To enable this, a PHY and/or MAC protocol layer of the receiver may be configured to communicate expiry information to the receiver's RLC protocol layer for indicating that a retransmission mechanism deployed for a data packet at the PHY and/or MAC protocol layer has been completed. In response to this expiry information, the RLC protocol layer of the receiver may be configured to signal the RLC protocol layer of the transmitter to request retransmission at the RLC protocol layer. The receiver RLC protocol layer may further terminate any running RLC t-reassembly timer before the RLC t-Reassembly timer is scheduled to expire.

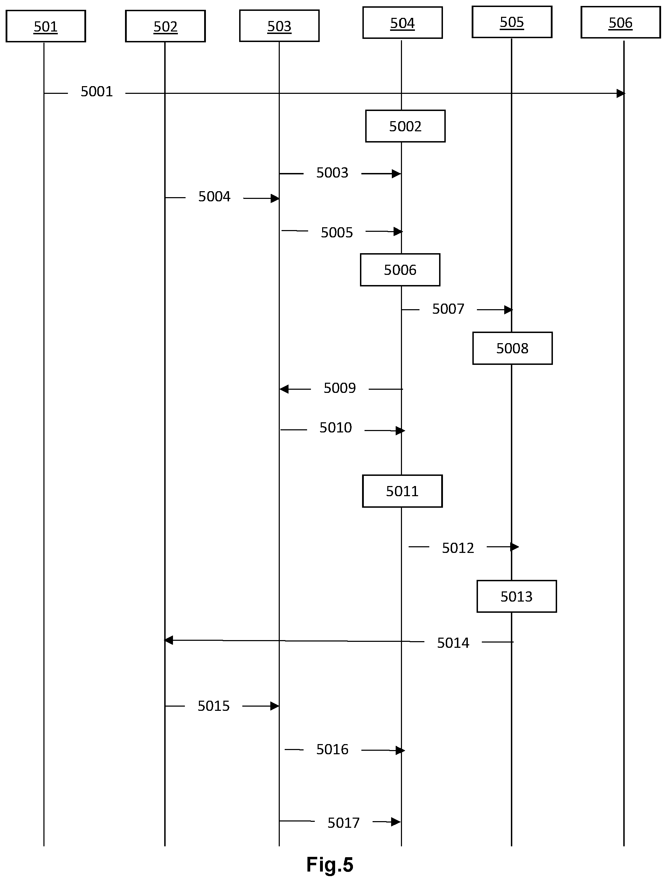

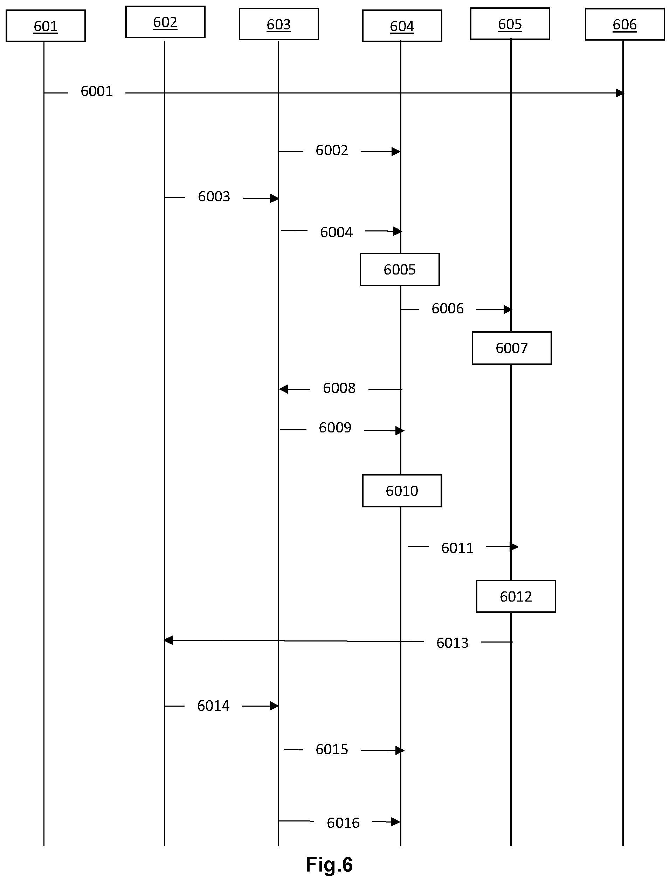

To illustrate how this may be achieved, FIGs. 5 and 6 respectively illustrate "semi-static" and "dynamic" mechanisms for informing the RLC protocol layer of when a retransmission layer at the PHY/MAC protocol layer has actually terminated. Although these examples are framed in the context of a transmitting access network node and a receiving UE, it is understood that the presently described principles are not limited to these apparatus.

In the semi-static case, the transmitter PHY/MAC protocol layer informs the receiver PHY/MAC protocol layer in advance of how many times the transmitter PHY/MAC protocol layer will transmit a missing packet (e.g., a packet that has not been received correctly at the receiver PHY/MAC protocol layer). The receiver PHY/MAC protocol layer subsequently counts a number of transmissions of the missing packet and informs the receiver RLC protocol layer when the number of transmissions of the missing packet equals the number of times the transmitter PHY/MAC protocol layer will transmit the missing packet.

In contrast, the dynamic case relates to the transmitter PHY/MAC protocol layer explicitly signaling the receiver PHY-MAC protocol layer when a retransmission of a missing packet is the last retransmission of that missing packet. When the receiver PHY/MAC protocol layer receives this "last" transmission and it is determined that the data comprised therein cannot be recovered based on all transmissions of this missing packet, the receiver PHY/MAC may identify that no more retransmissions of the missing packet will be performed by the PHY/MAC protocol layer and inform the receiver RLC protocol layer accordingly.

In both cases, following the receiver RLC protocol layer being informed that no further PHY/MAC protocol layer retransmissions will be performed in respect of the missing packet, the receiver RLC protocol layer may cause the transmitter RLC protocol layer to cause retransmission of the missing packet in accordance with RLC-layer data recovery mechanism. This may be effected, for example, by the receiver RLC protocol layer causing a STATUS PDU message to be transmitted to the transmitter RLC protocol layer.

FIG. 5 illustrates signaling that may be performed in the semi-static case.

FIG. 5 illustrates a process for retransmission that may be applied in respect of each of k HARQ processes. The receiver (e.g., a UE) may store a maximum number of retransmissions per HARQ process *C*0*ₖ* = { *C*0₁, ... *C*0*_{K}*} received from a transmitter (e.g., a network node). *C*0*ₖ* may be a vector with size equal to the number of HARQ processes. Stated differently, each HARQ process may be associated with a respective maximum number of retransmissions.

The UE may initialize a respective retransmission counter (*C*1*ₖ*) in its MAC protocol layer when the UE generates the first NACK feedback for any of said HARQ processes. *C*1*ₖ* may be a vector with size equal to the number of HARQ processes. Stated differently, the receiver may comprise a respective counter for each HARQ process. Each of the elements of *C*1*ₖ* may comprise an updated number of retransmissions that the UE counts per HARQ process.

When an initialized retransmission counter equals the stored maximum number of retransmissions, the UE MAC protocol layer may inform the UE's RLC protocol layer through an internal message (UE implementation) to terminate the RLC acknowledged mode t-Reassembly timer and generate a STATUS PDU.

How the UE messages its RLC protocol layer may be implementation specific. For example, when the RLC protocol layer labels packet data units (PDUs) and/or service data units (SDUs) using explicit sequence numbering, the RLC protocol layer may determine when to start t-Reassembly timer for generating a STATUS PDU for a specific PDU/SDU by identifying that non-consecutive sequence numbers have been received in consecutive PDUs and/or SDUs received at the RLC protocol layer. The t-Reassembly timer may be initialized in response to this identification, and may be considered as being tightly coupled to specific missing PDUs.

FIG. 5 illustrates signaling that may be performed between a transmitter comprising a transmitter RRC layer 501, a transmitter RLC protocol layer 502, and a transmitter MAC protocol layer 503, and a receiver comprising a receiver MAC protocol layer 504, a receiver RLC protocol layer 505, and a receiver RRC layer 506.

During 5001, the transmitter RRC 501 signals the receiver RRC 506. This signaling may comprise an indication of a maximum number of HARQ retransmissions that are to be performed at the MAC level. This indication may be labelled as "*MaxrofHARQReTxPerHARQ-PRocessforPDSCH*". This indication may comprise a value *C0* that indicates the maximum number of HARQ retransmissions per HARQ process. This indication may be comprised in an RRC radio link control establishment setup signaling operation.

During 5002, the receiver MAC 504 stores the value *C0*. The receiver MAC 504 may store the value *C0* after being configured to store this value by the receiver radio resource control layer.

During 5003, the transmitter MAC 503 signals the receiver MAC 504. This signaling may comprise downlink control information (DCI). This signaling may indicate a modulation and coding scheme (MCS) for signaling data between the transmitter and the receiver. This signaling may comprise an indication that there is no new data being transmitted (e.g., the new data indicator (NDI) may equal zero).

During 5004, the transmitter RLC 502 signals the transmitter MAC 503. This signaling may comprise sequence numbering that labels protocol data units (PDUs) to be transmitted by the transmitter MAC 503 to the receiver MAC 504.

During 5005, the transmitter MAC 503 signals the receiver MAC 504. This signaling may comprise data in the form of PDUs. This signaling may be transmitted using a physical downlink shared channel. This signaling may label, at an RRC-level, the transmitted data using the sequence numbers indicated during 5004. This sequence numbering may be transparent at the MAC level. Stated differently, the receiver MAC 504 may not see the sequence numbers.

During 5006, the receiver MAC 504 determines (e.g., using cyclic redundancy check mechanisms) that at least one PDU has not been received correctly. For example, the receiver MAC 504 may determine that at least one received signalling has not been decoded correctly at the MAC/PHY level. Stated differently, the receiver MAC 504 determines to signal a NACK to the transmitter in respect of at the least one PDU. During this time, a counter *C1* is started, which tracks a number of retransmissions made of the at least one PDU.

During 5007, the receiver MAC 504 signals the receiver RLC 505. This signaling may comprise MAC PDUs received at the receiver MAC 504 from the transmitter MAC 503, and may comprise a retransmission of the at least one PDU negatively acknowledged during 5006.

During 5008, the receiver RLC 505 begins processing the received MAC PDUs. The receiver RLC 505 may start a timer (e.g., the t-Reassembly timer mentioned above).

During 5009, the receiver MAC 504 signals the transmitter MAC 503. This signaling may comprise a NACK in respect of the at least one PDU retransmitted by the transmitter MAC 503. This signaling may be transmitted over, for example, a physical uplink shared channel and/or a physical uplink control channel.

During 5010, the transmitter MAC 503 signals the receiver MAC 504. This signaling may comprise downlink control information. This signaling may indicate that a specific Transport Block (TB) is in error retransmission (e.g., that retransmission of a specific TB is being requested) and set the NDI equal to zero.

During 5011, the receiver MAC 504 determines (e.g., using the sequence number labelling and/or cyclic redundancy checking) that the at least one PDU has still not been received correctly. Stated differently, the receiver MAC 504 determines to signal a NACK to the transmitter in respect of the at least one PDU. During this time, it is determined whether the value of counter *C1* equals *C0.* NACKs are not transmitted in respect of the at least one PDU that has not been correctly received. When the value of counter *C1* equals (or exceeds) *C0,* the receiver MAC 504 proceeds to 5012. When the value of counter *C1* is less than *C0,* the receiver MAC 504 returns to 5007.

During 5012, the receiver MAC 504 signals the receiver RLC 505. This signaling indicates that the timer started during 5008 should be terminated.

During 5013, the receiver RLC 505 terminates the timer started during 5008. The receiver RLC 505 may generate a STATUS PDU, or some other message for requesting retransmission of the at least one PDU that has not been successfully received.

During 5014, the receiver RLC 505 signals the transmitter RLC 502. This signaling may comprise the STATUS PDU generated during 5013. This signaling may be transmitted over the physical uplink shared channel (PUSCH) and/or physical uplink control channel (PUCCH).

During 5015, the transmitter RLC 502 signals the transmitter MAC 503. This signaling may comprise an instruction to retransmit the PDU received incorrectly.

During 5016, the transmitter MAC 503 signals the receiver MAC 504. This signaling may comprise downlink control information. The downlink control information may comprise an indication of a modulation and coding scheme. The signaling may comprise an indication that NDI=1.

During 5017, the transmitter MAC 503 signals the receiver MAC 504. This signaling may comprise an indication that TB N+1. Stated differently, the TB index used to label the PDU to be retransmitted is updated relative to previous transmissions. A different TB index may be used to indicate different transmission characteristics for transmission and/or reception of a transmission block (e.g., different MCS). This signaling may be transmitted on the physical downlink shared channel.

The transmitter/network node of FIG. 5 may thus communicate the maximum number of retransmissions to the receiver/UE for each HARQ process in advance of the last retransmission. This advance information may enable the receiver/UE to monitor or otherwise determine when a last (e.g., final) retransmission attempt has been performed at the MAC protocol layer.

The signaling between the network node and UE to configure the maximum number of retransmissions at the UE MAC protocol layer may be performed using RRC signaling. The new configuration may be fully controlled by the network. The new configuration may allow the UE to monitor the H-ARQ status and terminate the RLC timer early. When not configured, the UE can follow the legacy RLC configuration method (e.g., no early termination of the RLC-layer retransmission timer).

The UE may cause the UE RLC protocol layer to be informed about expiry events (e.g., about when a HARQ process has been terminated in respect of a specific PDU and/or SDU).

FIG. 6 illustrates signaling in relation to the dynamic scenario.

FIG. 6 illustrates signaling that may be performed between a transmitter comprising a transmitter RRC 601, a transmitter RLC 602, and a transmitter MAC 603, and a receiver comprising a receiver MAC 604, a receiver RLC 606, and a receiver RRC 606.

During 6001, the transmitter RRC 601 signals the receiver RRC 606. This signaling may be comprised in an RRC radio link control establishment setup signaling operation.

During 6002, the transmitter MAC 603 signals the receiver MAC 604. This signaling may comprise an indication of a last data indicator (LDI). In the present example, LDI equals 0. This signaling may comprise downlink control information (DCI). This signaling may indicate a modulation and coding scheme for signaling data between the transmitter and the receiver. This signaling may comprise an indication that NDI=0.

During 6003, the transmitter RLC 602 signals the transmitter MAC 603. This signaling may comprise an indication of sequence numbers to be applied to protocol data units (PDUs) to be transmitted by the transmitter MAC 603 to the receiver MAC 604.

During 6004, the transmitter MAC 603 signals the receiver MAC 604. This signaling may comprise data in the form of PDUs. This signaling may be transmitted using a physical downlink shared channel. This signaling may label the transmitted data using the sequence numbers indicated during 6003.

During 6005, the receiver MAC 604 determines (e.g., using the sequence number labelling and/or cyclic redundancy checking) that at least one PDU has not been received correctly. Stated differently, the receiver MAC 604 determines to signal a NACK to the transmitter in respect of at least one PDU.

During 6006, the receiver MAC 604 signals the receiver RLC 605. This signaling may comprise MAC PDUs received at the receiver MAC 604 from the transmitter MAC 603.

During 6007, the receiver RLC 605 begins processing the received MAC PDUs. The receiver RLC 605 may start a timer (e.g., the t-Reassembly timer mentioned above).

During 6008, the receiver MAC 604 signals the transmitter MAC 603. This signaling may comprise a NACK in respect of at least one PDU transmitted by the transmitter MAC 603. This signaling may be transmitted over, for example, a physical uplink shared channel and/or a physical uplink control channel.

During 6009, the transmitter MAC 603 signals the receiver MAC 604. This signaling may comprise downlink control information. This signaling may indication TB is in error retransmission, with NDI=0 (e.g., as in the example of FIG. 6). This signaling may indicate that the LDI has changed. In the present example, the LDI may be increased to equal 1.

During 6010, the receiver MAC 604 determines (e.g., using the sequence number labelling and/or cyclic redundancy checking) that the at least one PDU has still not been received correctly. Stated differently, the receiver MAC 604 determines to signal a NACK to the transmitter in respect of the at least one PDU. During this time, it is determined the LDI has changed. When LDI is determined to have changed, the receiver MAC 604 proceeds to 6011. When the LDI is determined to have not changed (e.g., if the LDI in 6009 was instead still equal to 0), the receiver MAC 604 returns to 6006.

During 6011, the receiver MAC 604 signals the receiver RLC 605. This signaling indicates that the timer started during 6007 should be terminated.

During 6012, the receiver RLC 605 terminates the timer started during 6007. The receiver RLC 605 may generate a STATUS PDU.

During 6013, the receiver RLC 605 signals the transmitter RLC 602. This signaling may comprise the STATUS PDU generated during 6013. This signaling may be transmitted over the physical uplink shared channel and/or physical uplink control channel.

During 6014, the transmitter RLC 602 signals the transmitter MAC 603. This signaling may comprise an instruction to retransmit the PDU received incorrectly.

During 6015, the transmitter MAC 603 signals the receiver MAC 604. This signaling may comprise downlink control information. The downlink control information may comprise an indication of a modulation and coding scheme. The signaling may comprise an indication that NDI=1.

During 6016, the transmitter MAC 603 signals the receiver MAC 604. This signaling may comprise an indication that TB N+1. This signaling may be transmitted on the physical downlink shared channel.

As per the signaling method of FIG. 6, a network node may signal an explicit indication of when the last transmission has been attempted. This explicit indication indicates that no further H-ARQ retransmissions will take place. The network node may directly send a request to the UE to expire/terminate its t-reassembly timer. This may be signaled using, for example, DCI and/or a MAC control element.

One way of signaling this information is by means of physical downlink control channel (PDCCH) control signaling. For example, similar to a "NEW DATA" indicator field that is currently used, a new indicator field for "LAST DATA" or "LAST Tx ATTEMPT" can be added as part of resource allocation signaling. Activation of the signaling mode to cause the UE to monitor for signals related to dynamic signaling of a last transmission indicator may also be toggled on and/or off by means of explicit RLC signaling if it is desired to save DCI bits.

As mentioned above, the presently disclosed last data indicator may be similar to the new data indicator (NDI) field in the DCI (see, for example, 3GPP TS 38.214). The last data indicator may comprise a single bit field. When the UE MAC's attempt at decoding this last retransmission fails, the UE MAC informs the UE's RLC entity to terminate the t-Reassembly timer and send a STATUS PDU.

In one example, the LDI field can be combined with the NDI field to give a single two bit field with combinations such as:
00 - New transmission.
01 - Retransmission
10 - Reserved
11 - Last data

In another example, the LDI may be maintained as a separate single bit field from the NDI with values:
0 - Not last retransmission
1 - Last retransmission

Like in the semi static case, the LDI indicator may be HARQ process specific, such that a received LDI indicator relates to a specific HARQ process (e.g., less than all HARQ processes currently deployed between the transmitter and the receiver).

The UE MAC may use internal messaging to inform the RLC protocol layer to terminate the t-Reassembly timer.

Which of the semi-static and dynamic cases is more useful in a specific case may vary with the specifics of that case.

For example, the semi-static option offers a signaling efficient approach by limiting a transmitter to work with dynamic number of maximum retransmissions based on, for example, any of a plurality of different factors, including current load considerations, hardware limitations (e.g., memory, processor limitations), energy consumption limitations, etc. However, this semi-static option may use more monitoring and thus increased complexity to estimate the early timer event at the receiver.

In contrast, the dynamic option uses more signaling between the transmitter and the receiver than the semi-static option, but offers more flexibility in terms of scheduler and link adaptation at the transmitter and requires less monitoring of the H-ARQ processes at the receiver than the semi-static option.

Although the presently described mechanisms are especially useful for cases when a receiver is configured with only a single RLC acknowledged mode entity (e.g., so that there is no ambiguity between what was sent on the physical layer and how it maps to the logical channels the RLC protocol layer controls), the mechanisms may be applied to other scenarios.

For example, the present mechanisms may be applied when the missing packet on the air interface applies to a signaling radio bearer (e.g., RRC message or otherwise) that is not part of the RLC acknowledged mode entity.

In this example, the RLC acknowledged mode may react to any expired transmission and it is expected that signaling radio bearer will not be expired. In the dynamic method, that is covered directly as the transmitter decides which transmissions it communicates expiration notice for. In the semi-static method, signaling radio bearers (SRBs) may be sent only on certain H-ARQ stop-and-wait (SAW) processes, or it may be assumed that there is no maximum number of transmission attempts.

Therefore, the presently described techniques are not limited to RLC acknowledged mode.

As another example, the present mechanisms may be applied when a receiver has parallel RLC acknowledged mode entities configured for the radio bearers in the interface between the receiver and the transmitter (e.g., the Uu interface when the transmitter-receiver pair is an access network node-UE pair).

In this example, the RLC acknowledged mode may only react to missing PDUs when there is a low probability of packets being missing across all current H-ARQ communications. The RLC protocol layer in the receiver handling the parallel RLC acknowledged mode entities may optimize which entity the retransmission should be done for based on parallel monitoring of all the flows. The receiver may comprise an internal expiry time that allows for pending service data units (SDUs) to reach the receiver before a decision for retransmission is made at the RLC protocol layer. Alternatively, the transmitter MAC protocol layer could explicitly indicate to the receiver which RLC acknowledged mode entity a certain expiration applies for.

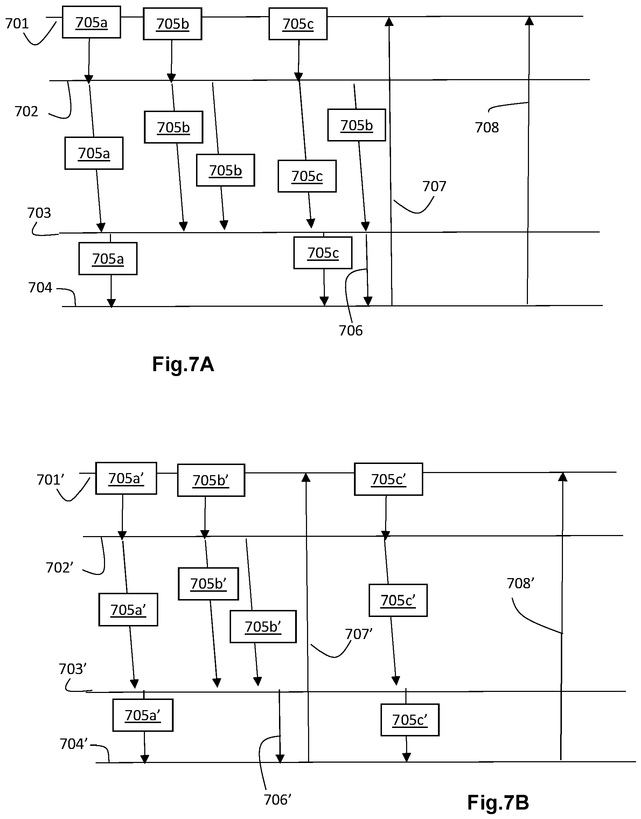

FIGs. 7A and 7B illustrate latency gain that may be achieved using the presently described mechanisms in an access network node and a UE.

FIGs. 7A and 7B illustrate a latency gain using the above-described dynamic example.

FIG. 7A illustrates an access network node RLC protocol layer 701, an access network node MAC protocol layer 702, a UE MAC protocol layer 703, and a UE RLC protocol layer 704. Time increases along the x axis in FIG. 7A.

In this example, the access network node RLC protocol layer 701 signals a first SDU 705a, a second SDU 705b, and a third SDU 705c to the UE RLC protocol layer 704 via the MAC protocol layers, but the UE RLC protocol layer 704 only receives the first and third SDUs. As shown in FIG. 7A, the access network node MAC protocol layer 702 transmits the second SDU 705b three times. In the third transmission, the signaling from the access network node MAC protocol layer 702 to the UE MAC protocol layer 703 comprises a last data indicator (or similar). This third transmission is shown as occurring after the receipt, by the UE RLC protocol layer 704, of the third SDU 705c. As the UE RLC protocol layer 704 can determine from receipt of the third SDU 705c that the second SDU 705b should have been received (and has not been received), the UE RLC protocol layer 704 starts (e.g., initializes) the T-reassembly timer).

In response to receiving the last data indicator, the UE MAC protocol layer 703 signals an indication 706 to the UE RLC protocol layer that indicates that no more retransmissions of the second SDU 705b will be autonomously performed by the MAC protocol layers. Therefore, the UE RLC protocol layer 704 may signal a STATUS PDU to the access network node RLC protocol layer 701 at 707 that indicates that the second SDU 705b has not been received. Without receipt of the indication 706 from the UE MAC protocol layer, this STATUS PDU would have instead been signalled at 708. Consequently, use of the present techniques enables a latency gain of the time difference between 707 and 708 over previously used systems.

FIG. 7B differs from FIG. 7A in the time difference between when the t-reassembly timer is initialized and receipt, at the UE RLC protocol layer, of an indication of the second SDU not being received correctly.

FIG. 7B illustrates an access network node RLC protocol layer 701', an access network node MAC protocol layer 702', a UE MAC protocol layer 703', and a UE RLC protocol layer 704'. Time increases along the x axis in FIG. 7B.

In this example, the access network node RLC protocol layer 701' signals a first SDU 705a', a second SDU 705b', and a third SDU 705c' to the UE RLC protocol layer 704' via the MAC protocol layers, but the UE RLC protocol layer 704' only receives the first and third SDUs. As shown in FIG. 7B, the access network node MAC protocol layer 702' transmits the second SDU 705b' a plurality of times. In the last transmission of the second SDU 705b', the signaling from the access network node MAC protocol layer 702' to the UE MAC protocol layer 703' comprises a last data indicator (or similar). This last transmission is shown as occurring before the receipt, by the UE RLC protocol layer 704', of the third SDU 705c'.

When the UE RLC protocol layer 704' receives the third SDU 705c', the UE RLC protocol layer 704' would have ordinarily started (e.g., initialized) the T-reassembly timer.

In response to receiving the last data indicator, the UE MAC protocol layer 703' signals an indication 706' to the UE RLC protocol layer that indicates that no more retransmissions of the second SDU 705b' will be autonomously performed by the MAC protocol layers. Therefore, the UE RLC protocol layer 704' may signal a STATUS PDU to the access network node RLC protocol layer 701' at 707' that indicates that the second SDU 705b' has not been received. Without receipt of the indication 706' from the UE MAC protocol layer, this STATUS PDU would have instead been signalled at 708', at the expiry of the T-reassembly timer. Consequently, use of the present techniques enables a latency gain of the time difference between 701' and 708' over previously used systems.

As an example, consider that the maximum number of retransmissions for an eMBB traffic case (UE processing capability 1) is set to 3. For a 15kHz subcarrier spacing, the delay incurred at the MAC protocol layer is 11.319 ms. Therefore, if the missing RLC PDU was sent just before the correctly received one (and that made it in first transmission attempt on the PHY), the missing PDU might still arrive within the following 11.319 ms if it has maximum priority by the scheduler. If the RLC t-reassembly timer is set to 20ms to accommodate this delay but also some multi-user scheduling delay, then the UE waits for the t-reassembly timer to expire after 8.681ms (i.e., 20ms - 11.319ms). This wait can be cut down if there is an awareness of the maximum number of HARQ retransmissions or if communicated explicitly, as shown in FIGs. 7A and 7B.

Furthermore, where there is no t-reassembly timer running in the RLC protocol layer at the instance of exhausting the maximum number of HARQ retransmission (such as in the example of FIG. 7B), a retransmission request can be made via the STATUS PDU without starting the t-reassembly timer, leading to even greater latency saving.

Therefore, the proposed mechanisms may reduce the latency incurred in cellular networks by initiating an early termination of the RLC t-reassembly timer. This may prove useful for applications and use cases that are not delay tolerant and have a tight delay budget.

FIGs. 8 and 9 illustrate features of the above examples. It is therefore understood that features mentioned below may find functional correspondence with at least one feature mentioned in the above examples. It is further understood that the above examples may illustrate example deployment of the presently described principles.

FIG. 8 illustrates features that may be performed by an apparatus for a receiver.

**The** receiver may comprise a plurality of protocol layers for receiving a data transmission. For example, the receiver may comprise a lower protocol layer layer (e.g., a PHY and/or MAC layer), and an RLC layer. The lower protocol layer layer may be configured to perform a first retransmission procedure in respect of a missing data packet with a corresponding lower protocol layer layer of a transmitter of the missing data packet. The RLC protocol layer of the receiver may be configured to perform a second retransmission procedure with a corresponding RLC protocol layer of the transmitter when the RLC protocol layer of the receiver identifies that the missing data packet has not been correctly decoded by the lower protocol layer layer of the receiver.

During 801, the apparatus receives, at a lower protocol layer of the receiver from a lower protocol layer of a transmitter, an indication of when a first retransmission mechanism between the transmitter and receiver at the lower protocol layer will terminate.

During 802, the apparatus causes retransmission of a data packet according to the first retransmission mechanism. This retransmission according to the first retransmission mechanism may cause the data packet to be retransmitted at the lower protocol layer level a plurality of times (e.g., more than one retransmission).

During 803, the apparatus determines, at the lower protocol layer of the receiver using the received indication, that the first retransmission mechanism has been completed in respect of the data packet. Stated differently, the apparatus may determine that the first retransmission mechanism has been terminated (e.g., stopped) in respect of the data packet by the corresponding lower protocol layer of the transmitter.

During 804, the apparatus signals, from the lower protocol layer of the receiver to a radio link control, RLC, protocol layer of the receiver, an indication that the data packet has not been received. Stated differently, during 804, the apparatus may signal from the lower protocol layer layer of the receiver to the RLC layer of the receiver, an indication that the first retransmission mechanism has been completed in respect of the data packet. This indication may comprise an explicit indication. Stated differently, during 804, the apparatus may signal from the lower protocol layer layer of the receiver to the RLC layer of the receiver, an indication that the lower protocol layer will no longer cause retransmission of the data packet using the first retransmission mechanism.

This indication of 8004 may comprise an explicit indication.

The apparatus may cause, by the RLC protocol layer of the receiver in response to said signaling of 804, retransmission of the data packet at the RLC protocol layer using a second retransmission mechanism, wherein the lower protocol layer comprises a physical protocol layer and/or a medium access control protocol layer. The second retransmission mechanism may be different to the first retransmission mechanism. For example, the first retransmission mechanism may be initiated by the lower protocol layer, while the second retransmission mechanism may be initiated by the RLC protocol layer.

The causing, by the RLC protocol layer of the receiver in response to said signaling, retransmission of the data packet at the RLC protocol layer using a second retransmission mechanism, may comprise signaling, to an RLC protocol layer of the transmitter, an indication that the data packet has not been received.

**As** mentioned above, the received indication of the when the first retransmission mechanism will be completed may be a static indication and/or a dynamic indication.

For the static case, the received indication may indicate a maximum number of transmissions of a data packet. In such a case, the determining that the first retransmission mechanism has been completed may comprise determining that the number of transmissions of the data packet equals the maximum number of transmissions. Although this may be determined in any of a plurality of different ways, one way is to use a counter. For example, the determining that the number of transmissions of the data packet equals the maximum number of transmissions may comprise: initializing a counter that tracks a number of transmissions of the data packet at the lower protocol layer; and identifying when a current value of the counter equals either zero or the maximum number of transmissions of the data packet. The zero case may correspond to counting down from the indicated maximum number, while the maximum number may correspond to counting up to the indicated maximum number. When at least one of these counter values is reached, the apparatus may consider that the number of transmissions of the data packet has reached the maximum number of transmissions.

For the static case, the maximum number of transmissions may represent either a total number of transmissions (including the initial transmission of the data packet), or a total number of transmissions (e.g., excluding the initial transmission of the data packet).

Stated differently, the maximum number of transmissions may comprise at least one of:
1. max # of transmissions X: which means there will be a first transmission (original TB) and up to X-1 retransmissions.
2. max # of retransmissions Y: which means there will be a first transmission (original TB) and up to Y retransmissions.

For the dynamic case, the received indication may indicate that a current and/or next transmission of the data packet is the last transmission of the data packet using the first retransmission mechanism. In such a case, the determining that the first retransmission mechanism has been completed may simply comprise detecting the indication that indicates that the current and/or next transmission of the data packet is the last transmission of the data packet using the first retransmission mechanism. The received indication may be explicit.

As mentioned in the above examples, when the apparatus is already running a timer at the RLC protocol layer for determining when to request retransmission of a data packet at the RLC protocol layer, the apparatus may terminate this timer early in response to receiving the indication from the lower protocol layer.

For example, the apparatus may initialize, at the RLC protocol layer of the receiver, a timer when the RLC protocol layer of the receiver detects that the data packet has not been correctly received, and terminate the timer early in response to said signaling, wherein terminating the timer causes the RLC protocol layer of the receiver to signal, to an RLC protocol layer of the transmitter, an indication that the data packet has not been successfully received.

As the corresponding RLC layer of the transmitter may cause retransmission of the data comprised in the data packet using at least one RLC-layer retransmission procedure/mechanism, the lower protocol layer may the data comprised in the data packet subsequent to the first retransmission mechanism being completed.

The apparatus may receive, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver. Stated differently, the presently described mechanisms may be applied at a per-HARQ level.

FIG. 9 illustrates operations that may be performed by a transmitter. The transmitter may be the transmitter mentioned in relation to FIG. 8. The transmitter may comprise a plurality of protocol layers configured to cause retransmission of a missing data packet in accordance with a respective retransmission mechanism for that protocol layer.

During 901, the apparatus transmits, at a lower protocol layer of the transmitter to a lower protocol layer of a receiver, an indication of when a first retransmission mechanism between the transmitter and receiver at the lower protocol layer will be completed.

During 902, the apparatus causes retransmission of a data packet using the first retransmission mechanism.

During 903, the apparatus completes the first retransmission mechanism when a maximum number of retransmissions has been reached, wherein the lower protocol layer is a physical protocol layer and/or a medium access control layer.

The transmitted indication may indicate the maximum number of transmissions of a data packet.

The transmitted indication may indicate that a current and/or next transmission of the data packet is the last transmission of the data packet using the first retransmission mechanism.

The apparatus may receive at a radio link control, RLC protocol layer of the transmitter from the RLC protocol layer of the receiver, an indication that the data packet has not been received.

The apparatus may cause, by the RLC protocol layer of the transmitter, the lower protocol of the transmitter to retransmit data comprised in the data packet after the first retransmission mechanism has been completed.

The apparatus may transmit, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

The subject disclosure has provided by way of non-limiting and illustrative examples a full and informative description of some of the various examples described herein. However, various modifications and adaptations may become apparent to those skilled in the relevant arts in view of the foregoing description, when read in conjunction with the accompanying drawings and the claims. However, all such and similar modifications of the teachings will still fall within the scope of the various examples of the subject disclosure.

In the above, different examples are described using, as an example of an access architecture to which the described techniques may be applied, a radio access architecture based on long term evolution advanced (LTE Advanced, LTE-A) or new radio (NR, 5G, 6G, etc.), without restricting the examples to such an architecture, however. The examples may also be applied to other kinds of communications networks having suitable means by adjusting parameters and procedures where appropriate. Some examples of other options for suitable systems are the universal mobile telecommunications system (UMTS) radio access network (UTRAN), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

As provided herein, several aspects are described in the various examples of the subject disclosure as well as in the claims. In general, some examples may be implemented in hardware or special purpose circuits, software code, logic or any combination thereof. For example, some aspects may be implemented in hardware, while other aspects may be implemented in firmware or software code which may be executed by a controller, microprocessor or other computing device, although examples are not limited thereto. While various examples may be illustrated and described as block diagrams, flow charts, or using some other pictorial representation, it is understood that these blocks, apparatus, systems, techniques or methods described herein may be implemented in, as non-limiting and illustrative examples, hardware, software code, firmware code, special purpose circuits or logic, general purpose hardware or controller or other computing devices, or some combination thereof.

The examples may be implemented by computer software code stored in a memory and executable by at least one data processor of the involved entities or by hardware, or by a combination of software code and hardware.

The memory referred to herein may be of any type suitable to the local technical environment and may be implemented using any suitable data storage technology, such as semiconductor based memory devices, magnetic memory devices and systems, optical memory devices and systems, fixed memory and removable memory.

The (data) processors referred to herein may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting and illustrative examples.

Further in this regard it should be noted that any procedures, e.g., as in FIG. 8, and/or FIG. 9, and/or otherwise described herein, may represent operations of a program (e.g., computer program) being deployed by at least one processor comprised in an apparatus (where a program (e.g., computer program) comprises instructions for causing an apparatus to perform at least one action, the instructions being represented as software code stored on at least one memory), or interconnected logic circuits, blocks and functions, or a combination of operations of a computer program being deployed by at least one processor comprised in an apparatus and logic circuits, blocks and functions. The software code may be stored on memory, such as physical media as memory chips, or memory blocks implemented within the processor, magnetic media (such as, hard disk or floppy disks), and optical media (such as, for example, DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multicore processor architecture, as non-limiting and illustrative examples.

Additionally or alternatively, some examples may be implemented using circuitry. The circuitry may be configured to perform one or more of the functions and/or method steps previously described. That circuitry may be provided in the network node and/or the base station and/or in the communications device and/or in a core network entity.

As used herein, the term "circuitry" or "means" may refer to one or more or all of the following examples:
(a) hardware-only circuit implementations (such as, implementations in only analogue and/or digital circuitry);
(b) combinations of hardware circuits and software code, such as:
   (i) a combination of analogue and/or digital hardware circuit(s) with software/firmware code and
   (ii) any portions of hardware processor(s) with software code (including digital signal processor(s)), software code, and memory(ies) that work together to cause an apparatus, such as the communications device or base station to perform the various functions previously described; and
(c) hardware circuit(s) and or processor(s), such as a microprocessor(s) or a portion of a microprocessor(s), that utilizes software code (e.g., firmware) for operation, but the software code may not be present when not utilized for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware code. The term circuitry also covers, for example, integrated device(s).

Implementations of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The term "non-transitory," as used herein, is a limitation of the medium itself (e.g., tangible, not a signal) as opposed to a limitation on data storage persistency (e.g., RAM vs. ROM).

The scope of protection sought for the various examples of the subject disclosure is set out by the independent claims. The various examples and aspects/features thereof, described in this specification that do not, if any, fall under the scope of the independent claims are to be interpreted as examples useful for understanding this subject disclosure.

This subject disclosure has provided, by way of non-limiting and illustrative examples, a full and informative description of some example implementations. However, various modifications and adaptations may become apparent to those skilled in the relevant arts in view of the foregoing description, when read in conjunction with the accompanying drawings and the claims. However, all such and similar modifications of the teachings of this subject disclosure will still fall within the scope of this various examples described herein. Indeed, there is a further example implementation comprising a combination of one or more example implementations with any of the other example implementations described herein.

## Claims

1. An apparatus for a receiver, the apparatus comprising means for performing:
receiving, at a lower protocol layer of the receiver from a lower protocol layer of a transmitter, an indication of when a first retransmission mechanism between the transmitter and receiver at the lower protocol layer will terminate;
causing retransmission of a data packet according to the first retransmission mechanism;
determining, at the lower protocol layer of the receiver using the received indication, that the first retransmission mechanism has been completed in respect of the data packet; and
signaling, from the lower protocol layer of the receiver to a radio link control, RLC, protocol layer of the receiver, an indication that the data packet has not been received.

2. The apparatus as claimed in claim 1, the apparatus further comprising means for performing:
causing, by the RLC protocol layer of the receiver in response to said signaling, retransmission of the data packet at the RLC protocol layer using a second retransmission mechanism, wherein the lower protocol layer comprises a physical protocol layer and/or a medium access control protocol layer.

3. The apparatus as claimed in any preceding claim, wherein the received indication indicates a maximum number of transmissions of a data packet, and the means for determining that the first retransmission mechanism has been completed comprises means for:
determining that the number of transmissions of the data packet equals the maximum number of transmissions.

4. The apparatus as claimed in claim 3, wherein the means for determining that the number of transmissions of the data packet equals the maximum number of transmissions comprises means for:
initializing a counter that tracks a number of transmissions of the data packet at the lower protocol layer; and
identifying when a current value of the counter equals either zero or the maximum number of transmissions of the data packet.

5. The apparatus as claimed in claim 1, wherein the received indication indicates that a current and/or next transmission of the data packet is the last transmission of the data packet using the first retransmission mechanism, and the means for determining that the first retransmission mechanism has been completed comprises means for:
detecting the indication that indicates that the current and/or next transmission of the data packet is the last transmission of the data packet using the first retransmission mechanism.

6. The apparatus as claimed in any preceding claim, the apparatus further comprising means for performing:
initializing, at the RLC protocol layer of the receiver, a timer when the RLC protocol layer of the receiver detects that the data packet has not been correctly received; and
terminating the timer early in response to said signaling, wherein terminating the timer causes the RLC protocol layer of the receiver to signal, to an RLC protocol layer of the transmitter, an indication that the data packet has not been successfully received.

7. The apparatus as claimed in any preceding claim, the apparatus further comprising means for performing: receiving, at the lower protocol layer of the receiver from the lower protocol layer of the transmitter, respective indications of when a first retransmission mechanism between the transmitter and receiver at the lower protocol layer will be completed for respective hybrid automatic repeat request processes established between the transmitter and the receiver.

8. An apparatus for a transmitter, the apparatus comprising means for performing:
transmitting, at a lower protocol layer of the transmitter to a lower protocol layer of a receiver, an indication of when a first retransmission mechanism between the transmitter and receiver at the lower protocol layer will be completed;
causing retransmission of a data packet using the first retransmission mechanism; and
completing the first retransmission mechanism when a maximum number of retransmissions has been reached, wherein the lower protocol layer is a physical protocol layer and/or a medium access control layer.

9. The apparatus as claimed in claim 8 wherein the transmitted indication indicates the maximum number of transmissions of a data packet.

10. The apparatus as claimed in claim 8, wherein the transmitted indication indicates that a current and/or next transmission of the data packet is the last transmission of the data packet using the first retransmission mechanism.

11. The apparatus as claimed in any of claims 8 to 10, the apparatus further comprising means for performing: receiving, at a radio link control, RLC, protocol layer of the transmitter from the RLC protocol layer of the receiver, an indication that the data packet has not been received.

12. The apparatus as claimed in any of claims 8 to 11, the apparatus further comprising means for performing: transmitting, from the lower protocol layer of the transmitter to the lower protocol layer of the receiver, respective indications of when the first retransmission mechanism between the transmitter and receiver at the lower protocol layer will be completed for respective hybrid automatic repeat request processes established between the transmitter and the receiver.

13. A method for an apparatus for a receiver, the method comprising:
receiving, at a lower protocol layer of the receiver from a lower protocol layer of a transmitter, an indication of when a first retransmission mechanism between the transmitter and receiver at the lower protocol layer will terminate;
causing retransmission of a data packet according to the first retransmission mechanism;
determining, at the lower protocol layer of the receiver using the received indication, that the first retransmission mechanism has been completed in respect of the data packet; and
signaling, from the lower protocol layer of the receiver to a radio link control, RLC, protocol layer of the receiver, an indication that the data packet has not been received.

14. A method for an apparatus for a transmitter, the method comprising:
transmitting, at a lower protocol layer of the transmitter to a lower protocol layer of a receiver, an indication of when a first retransmission mechanism between the transmitter and receiver at the lower protocol layer will be completed;
causing retransmission of a data packet using the first retransmission mechanism; and
completing the first retransmission mechanism when a maximum number of retransmissions has been reached, wherein the lower protocol layer is a physical protocol layer and/or a medium access control layer.

15. A computer program comprising instructions which, when the program is executed by a computer, cause the computer to carry out the method of at least one of claims 13 or 14.
